(19) Europäisches Patentamt
European Patent Office
Office européen des brevets

(11) **EP 3 340 453 B1**

(12) **EUROPEAN PATENT SPECIFICATION**

(45) Date of publication and mention
of the grant of the patent:
**10.03.2021   Bulletin 2021/10**

(51) Int Cl.:
**H02M 7/757** (2006.01)     **H02J 3/36** (2006.01)

(21) Application number: **16206163.4**

(22) Date of filing: **22.12.2016**

(54) **METHOD OF CONFIGURING A CLOSED-LOOP CONTROL SYSTEM**

VERFAHREN ZUR KONFIGURATION EINES GESCHLOSSENEN REGELSYSTEMS

PROCÉDÉ DE CONFIGURATION D'UN SYSTÈME DE COMMANDE EN BOUCLE FERMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018   Bulletin 2018/26**

(73) Proprietor: **General Electric Technology GmbH
5400 Baden (CH)**

(72) Inventors:
• **JASIM, Omar Fedhel
Wollaton
Nottingham, NG8 (GB)**
• **BRIFF, Pablo
Stafford, ST17 4YA (GB)**
• **DANG, Si
Stafford, ST16 2EB (GB)**
• **UDALAGAMA, Chanditha
Stafford, ST16 2DW (GB)**
• **FELISTE, Nirina
Stafford, ST16 3YL (GB)**

(74) Representative: **Rüger Abel Patentanwälte PartGmbB
Patentanwälte
Webergasse 3
73728 Esslingen a. N. (DE)**

(56) References cited:
**WO-A1-2015/155183     DE-A1-102009 040 745**

• **PHILIPP MUNCH ET AL: "Modeling and current control of modular multilevel converters considering actuator and sensor delays", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3 November 2009 (2009-11-03), pages 1633-1638, XP031629417, ISBN: 978-1-4244-4648-3**
• **TARISCIOTTI LUCA ET AL: "Modulated Model Predictive Control for a Three-Phase Active Rectifier", IEEE TRANSACTIONS ON INDUSTRY APPLICATIONS, IEEE SERVICE CENTER, PISCATAWAY, NJ, US, vol. 51, no. 2, 1 March 2015 (2015-03-01), pages 1610-1620, XP011575778, ISSN: 0093-9994, DOI: 10.1109/TIA.2014.2339397 [retrieved on 2015-03-17]**
• **SCHETTLER F ET AL: "HVDC transmission systems using voltage sourced converters design and applications", POWER ENGINEERING SOCIETY SUMMER MEETING, 2000. IEEE 16 - 20 JULY 2000, PISCATAWAY, NJ, USA,IEEE, PISCATAWAY, NJ, USA, vol. 2, 16 July 2000 (2000-07-16), pages 715-720, XP010510729, DOI: 10.1109/PESS.2000.867439 ISBN: 978-0-7803-6420-2**
• **MASOUD KARIMI-GHARTEMANI ET AL: "Processing of Symmetrical Components in Time-Domain", IEEE TRANSACTIONS ON POWER SYSTEMS, IEEE SERVICE CENTER, PISCATAWAY, NJ, US, vol. 22, no. 2, 1 May 2007 (2007-05-01), pages 572-579, XP011179830, ISSN: 0885-8950, DOI: 10.1109/TPWRS.2007.894860**

EP 3 340 453 B1

**EP 3 340 453 B1**

**Description**

METHOD OF CONFIGURING A CLOSED-LOOP CONTROL SYSTEM

This invention relates to methods of configuring a closed-loop control system and to closed-loop control systems, preferably for use in high voltage direct current power transmission applications.

It is known to control a converter using a closed loop control system, see for example P. Münch et al. :"Modeling and Current Control of Modular Multilevel Converters Considering Actuator and Sensor Delays", XP31629417.

TARISCIOTTI LUCA ET AL.: "Modulated Model Predictive Control for a Three-Phase Active Rectifier", IEEE TRANSACTIONS ON INDUSTRY APPLICATIONS, IEEE SERVICE CENTER, PISCATAWAY, NJ, US, vol. 51, no. 2, 1 March 2015 (2015-03-01), pages 1610-1620, XP011575778, ISSN: 0093-9994, DOI: 10.1109/TIA.2014.2339397 discloses a method and a control system for a converter. The control strategy creates a prediction for each possible state of the converter in the future and each of the possible states is evaluated by means of a cost function. The minimum of all of the evaluated possible future states is selected for controlling the converter.

The present invention refers to a method with the features of claim 1 and a closed-loop control system with the features of claim 3.

According the invention, there is provided a method of configuring a closed-loop control system, the control system comprising a controller and a plant, the controller configured to provide an actuator signal to the plant, the controller configured to receive a reference signal and a feedback signal, the feedback signal derived from a state of the plant, wherein a first state space representation of the control system includes at least one system delay, the method comprising the steps of:

transforming the first state space representation of the control system into a second, augmented state space representation of the control system;

configuring a control law based on the augmented state space representation of the control system, wherein the control law is configured to include at least one control term configured to compensate for at least one disturbance to the control system, wherein the control law is configured to include a time-advanced or predicted reference signal configured so that the state of the plant tracks the reference signal;

configuring the controller to implement the control law during the operation of the control system.

For the purposes of this specification, the term "disturbance" is intended to refer to any system variable that influences one or more state variables of a system. A given disturbance can be known (e.g. measured, such as measured AC and DC voltages and currents) or unknown (e.g. noise).

Controlling real-world closed-loop control systems presents several challenges such as measurement noise, input/output disturbances and system delays. As opposed to stochastic disturbances that can be filtered out to improve system performance, system delays present in a given closed-loop control system can lead to system instabilities if they are not properly taken into account during the design of the given closed-loop control system.

The method of configuring a closed-loop control system according to the first aspect of the invention is directed to the combination of delay compensation and time-advancing processes which not only improves the stability and performance of the plant in a computationally-efficient manner but also enables the closed-loop control system to attain a stable and near-zero instantaneous deviation between the reference and feedback signals.

Additionally the method of configuring a closed-loop control system according to the invention provides reliable control of the closed-loop control system even when the or each system delay is of an arbitrary known magnitude.

In embodiments of the invention, the or each system delay may be selected from a group including:

a measurement delay in a measurement of a disturbance to the control system;
a measurement delay in a measurement of the state of the plant;
an actuator delay in the provision of the actuator signal from the controller to the plant.

The method of configuring a closed-loop control system according to the invention provides a reliable means of compensating for such measurement and actuator delays while enabling optimisation of the control law for the closed-loop control system.

In embodiments of the invention, the control law may be configured to include a regulation control term configured to solve a regulation problem of the control system so as to compensate for at least one disturbance to the control system.

The configuration of the control law to include such a regulation control term enables the configuration of the closed-loop control system to attain asymptotic stability. This thereby prevents any disturbance, known or unknown, to the closed-loop control system from adversely affecting the closed-loop control system performance in steady-state.

In embodiments of the invention, the control law may be configured to include a feedforward control term configured to compensate for at least one known disturbance to the control system.

The configuration of the control law to include such a feedforward control term provides a reliable means of preventing any known disturbance to the closed-loop control system from adversely affecting the closed-loop control system performance in steady-state, while it enhances the tracking performance.

In embodiments of the invention, the control law may be configured to include an estimated state of the plant.

The configuration of the control law in this manner is beneficial when the state of the plant cannot be measured at a given time due to the presence of a measurement delay in a measurement of the state of the plant.

In such embodiments, the estimated state of the plant may be derived from at least one measured parameter and/or at least one known parameter of the control system.

In further such embodiments, the control law may be configured to include the time-advanced or predicted reference signal configured so that the estimated state of the plant tracks the reference signal.

According to the invention, the plant is a converter.

An AC side of the converter is operatively connected to a multi-phase AC network, and the method may further include the steps of:

> measuring a plurality of AC phase voltages at the AC side of the converter;
> obtaining a phase advance value equal to the difference between a plurality of fundamental frequency components of the AC network phase voltages of the AC network and a plurality of phase-advanced AC network phase voltages of the AC network;
> obtaining a plurality of phase-advanced AC phase voltages by combining the phase advance value with the plurality of measured AC phase voltages;
> obtaining a modified actuator signal by combining the plurality of phase-advanced AC phase voltages with the actuator signal;
> providing the modified actuator signal to the converter,
> wherein each of the AC phase voltages and AC network phase voltages is represented in the a-b-c stationary reference frame.

The provision of such steps in the method of configuring a closed-loop control system according to the first aspect of the invention is directed to a phase advancing process that provides compensation for phase shift and gain attenuation caused by at least one system delay (such as a measurement delay, a computational delay, and an actuator delay). This in turn improves the converter dynamics performance during AC network voltage fluctuations and enables the converter to cope with unbalanced operating conditions of the AC network voltages.

Moreso, the representation of each of the AC phase voltages and AC network phase voltages in the a-b-c stationary reference frame removes the requirement for a phase locked loop control for the converter. This has the advantages of:

> overcoming the difficulty of PLL control in synchronising a converter and a weak AC network with one another;
> obtaining higher bandwidth of the closed-loop control system for fast tracking of the reference signal, since there is no added delay in the feedback signal as a consequence of extracting positive and negative sequence components as required in d-q synchronous reference frame control;
> obviates the need to compensate for harmonic distortion in multi-phase AC systems (e.g. fifth and seventh harmonics in three-phase AC systems), as the plurality of measured AC phase voltages can be feedforwarded to the output of the controller; and
> addressing AC network voltage frequency variation without the need for adaptive filters.

In such embodiments, the multi-phase AC network and converter may be respectively operatively connected to primary and secondary sides of a transformer, the transformer configured to prevent zero sequence voltage components on the primary side of the transformer from appearing on the secondary side of the transformer, wherein the method may include the steps of:

> measuring the plurality of AC phase voltages at the primary side of the transformer;
> obtaining a modified plurality of measured AC phase voltages by cancelling a plurality of zero sequence voltage components from the plurality of measured AC phase voltages;
> obtaining the plurality of phase-advanced AC phase voltages by combining the phase advance value with the modified plurality of measured AC phase voltages.

In other embodiments of the invention, the cancellation of the zero sequence voltage components may be omitted. Hence, the phase advancing process based on the method of the first aspect of the invention is applicable mutatis mutandis to embodiments of the invention in which zero sequence voltage components on the primary side of the transformer are not prevented from appearing on the secondary side of the transformer, such as when the transformer has a star-star configuration.

In embodiments of the invention, the multi-phase AC network and converter may be respectively operatively connected to primary and secondary sides of a transformer, the transformer configured to prevent zero sequence voltage components on the primary side of the transformer from appearing on the secondary side of the transformer, wherein the method may include the steps of:

> measuring the plurality of AC phase voltages at the primary side of the transformer;
> obtaining a modified plurality of measured AC phase voltages by cancelling a plurality of zero sequence voltage components from the plurality of measured AC phase voltages;
> obtaining the plurality of phase-advanced AC phase voltages by combining the phase advance value with the modified plurality of measured AC phase voltages.

In other embodiments of the invention, the cancellation of the zero sequence voltage components may be omitted. Hence, the phase advancing process based on the method of the third aspect of the invention is applicable mutatis mutandis to embodiments of the invention in which zero sequence voltage components on the primary side of the transformer are not prevented from appearing on the secondary side of the transformer, such as when the transformer has a star-star configuration.

According to another aspect of the invention, there is provided a closed-loop control system comprising a controller and a converter, the controller configured to provide an actuator signal to the converter, the controller configured to receive a reference signal and a feedback signal, the feedback signal derived from a state of the converter, wherein an AC side of the converter is operatively connected to a multi-phase AC network, wherein the control system is configured to:

> receive a plurality of AC phase voltages measured at the AC side of the converter;
> obtain a phase advance value equal to the difference between a plurality of fundamental frequency components of the AC network phase voltages of the AC network and a plurality of phase-advanced AC network phase voltages of the AC network;
> obtain a plurality of phase-advanced AC phase voltages by combining the phase advance value with the plurality of measured AC phase voltages;
> obtain a modified actuator signal by combining the plurality of phase-advanced AC phase voltages with the actuator signal;
> provide the modified actuator signal to the converter,
> wherein each of the AC phase voltages and AC network phase voltages is represented in the a-b-c stationary reference frame.

The features and advantages of the method of configuring a closed-loop control system of the the invention and its embodiments apply mutatis mutandis to the closed-loop control system of the further aspect of the invention and its embodiments.

It will be appreciated that the use of the terms "first" and "second", and the like, in this patent specification is merely intended to help distinguish between similar features (e.g. the first and second state space representations), and is not intended to indicate the relative importance of one feature over another feature, unless otherwise specified.

A preferred embodiment of the invention will now be described, by way of a nonlimiting example, with reference to the accompanying drawings in which:

> Figure 1 shows an exemplary three-phase AC-DC converter;

> Figures 2 and 3 show schematically examples of control system models without any system delays;

> Figure 4 shows schematically a block diagram of a closed-loop control system without any system delays;

> Figures 5 and 6 show schematically examples of control system models with actuator and measurement delays;

> Figure 7 shows schematically a block diagram of a closed-loop control system with actuator and measurement delays;

> Figure 8 shows a graph of a system response of a closed-loop control system subject to linear quadratic regulator control when system delays are not taken into account in the configuration of the closed-loop control system;

Figure 9 shows a graph of a system response of a closed-loop control system subject to linear quadratic regulator control when system delays are taken into account in the configuration of the closed-loop control system in accordance with the invention;

Figure 10 shows schematically a block diagram of a phase advancing process implemented in a-b-c stationary reference frame in accordance with the invention; and

Figures 11 and 12 show graphs of a tracking response of a closed-loop control system subject to a phase advancing process implemented in a-b-c stationary reference frame in accordance with the invention.

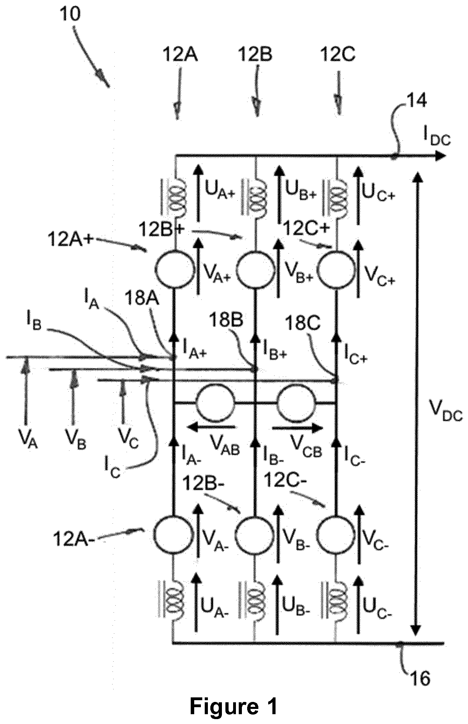

The three-phase AC-DC converter 10 of Figure 1 includes three converter limbs 12A, 12B, 12C. Each converter limb 12A, 12B, 12C extends between first and second DC terminals 14, 16, and each converter limb 12A, 12B, 12C includes a first limb portion 12A+, 12B+, 12C+ and a second limb portion 12A-, 12B-, 12C-. Each pair of first and second limb portions 12A+, 12A-, 12B+, 12B-, 12C+, 12C- in each converter limb 12A, 12B, 12C is separated by a corresponding AC terminal 18A, 18B, 18C.

Each AC terminal 18A, 18B, 18C is connected to a respective AC phase of a three-phase AC voltage $V_A$, $V_B$, $V_C$ of an AC grid via a transformer. In particular, the AC grid and converter may be respectively operatively connected to primary and secondary sides of the transformer, and the transformer has a star-delta configuration to prevent zero sequence voltage components on the primary side of the transformer from appearing on the secondary side of the transformer,

The three-phase AC-DC converter 10 is configured to operate within certain constraints depending on the associated power application. In Figure 1, the three-phase AC-DC converter 10 is configured to operate in accordance with a respective AC current demand phase waveform $I_A$, $I_B$, $I_C$ for each converter limb 12A, 12B, 12C which each converter limb 12A, 12B, 12C is required to track, and a DC current demand $I_{DC}$ which the converter limbs 12A, 12B, 12C are also required to track.

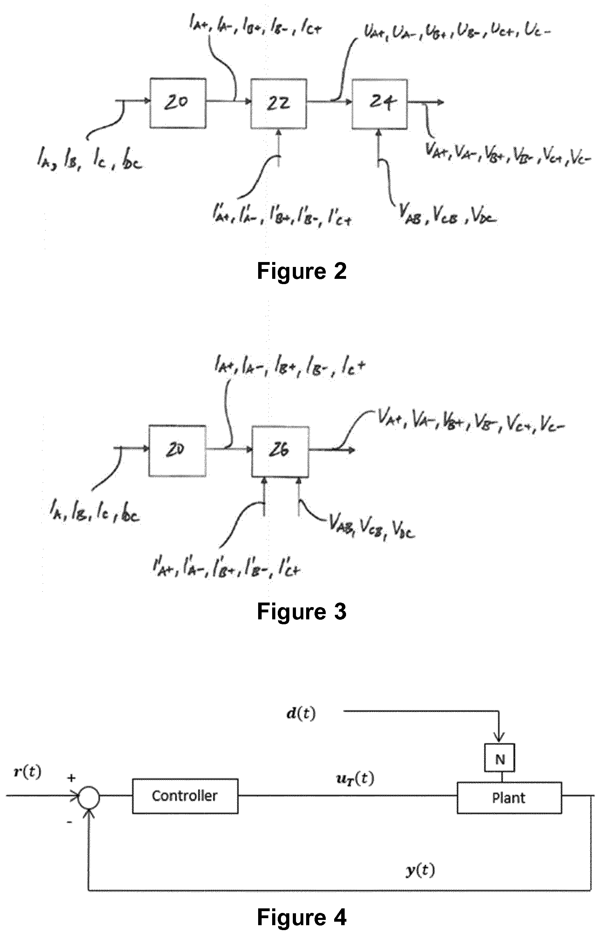

Figure 2 shows schematically a first example of a control system model for the three-phase AC-DC converter 10 of Figure 1.

As indicated by a first process block 20 in Figure 2, the AC current demand phase waveforms $I_A$, $I_B$, $I_C$ and the DC current demand $I_{DC}$ are used to derive a limb portion current reference signal $I_{A+}$, $I_{A-}$, $I_{B+}$, $I_{B-}$, $I_{C+}$ that each limb portion 12A-, 12A+, 12B+, 12B-, 12C+, 12C- must track in order for each converter limb to track the corresponding AC current demand phase waveform $I_A$, $I_B$, $I_C$ and the DC current demand $I_{DC}$.

In Figure 2, a second process block 22 receives the limb portion current reference signals $I_{A+}$, $I_{A-}$, $I_{B+}$, $I_{B-}$, $I_{C+}$, and additionally receives feedback in the form of actual measured limb portion currents $I'_{A+}$, $I'_{A-}$, $I'_{B+}$, $I'_{B-}$, $I'_{C+}$, which provides the current controller with closed-loop control. The second process block 22 utilises the received limb portion current reference signals $I_{A+}$, $I_{A-}$, $I_{B+}$, $I_{B-}$, $I_{C+}$, $I_{C-}$ and measured limb portion currents $I'A+$, $I'_{A-}$, $I'_{B+}$, $I'_{B-}$, $I'_{C+}$ so as to calculate inductive voltage portions $U_{A+}$, $U_{A-}$, $U_{B+}$, $U_{B-}$, $U_{C+}$, $U_{C-}$ of each limb portion 12A+, 12A-, 12B+, 12B-, 12C+, 12C-. The calculated inductive voltage portions $U_{A+}$, $U_{A-}$, $U_{B+}$, $U_{B-}$, Uc+, $U_{C-}$ are utilised (as indicated by a third process block 24) to generate an actuator signal to the plant which in this case is the three-phase AC-DC converter 10. The actuator signals are in the form of limb portion voltage signals $V_{A+}$, $V_{A-}$, $V_{B+}$, $V_{B-}$, Vc+, $V_{C-}$ which represent the desired voltage states of the limb portions 12A-, 12A+, 12B+, 12B-, 12C+, 12C-.

In generating the actuator signals, the third process block 24 also takes into account measured external disturbances to the control system, which are presented by $V_{AB}$, $V_{CBBC}$ and $V_{DC}$, where $V_{AB}$ is a voltage difference between the first and second converter limbs 12A, 12B, $V_{CB}$ is a voltage difference between the third and second converter limbs 12C, 12B, and $V_{DC}$ is a DC voltage difference between the first and second DC terminals 14, 16.

Figure 3 shows schematically a second example of a control system model for the three-phase AC-DC converter 10 of Figure 1.

The control system model of Figure 3 is similar to the control system model of Figure 2 in that the control system model of Figure 3 includes the same first process block 20 as shown in Figure 2. The control system model of Figure 3 however omits the second and third process boxes 22, 24, but instead includes a fourth process block 26.

The fourth process block 26 is similar in function to the combination of the second and third process boxes 22, 24. More specifically, the fourth process block 26 receives the limb portion current reference signals $I_{A+}$, $I_{A-}$, $I_{B+}$, $I_{B-}$, $I_{C+}$, the measured limb portion currents $I'A+$, $I'_{A-}$, $I'_{B+}$, $I'_{B-}$, $I'_{C+}$, and the measured external disturbances $V_{AB}$, $V_{CB}$, $V_{DC}$, and the fourth process block 26 generates the actuator signals $V_{A+}$, $V_{A-}$, $V_{B+}$, $V_{B-}$, $V_{C+}$, $V_{C-}$ based on the received limb portion current reference signals $I_{A+}$, $I_{A-}$, $I_{B+}$, $I_{B-}$, $I_{C+}$, measured limb portion currents $I'A+$, $I'_{A-}$, $I'_{B+}$, $I'_{B-}$, $I'_{C+}$, and measured external disturbances $V_{AB}$, $V_{CB}$, $V_{DC}$.

Figure 4 shows schematically a block diagram of a closed-loop control system that is representative of the control systems of Figures 2 and 3.

In Figure 4, the closed-loop control system comprises a controller and a plant. The plant in this case is the three-phase AC-DC converter 10 of Figure 1. The controller receives a difference between the limb portion current reference signals r(t) = [$I_{A+}$ $I_{A-}$ $I_{B+}$ $I_{B-}$ $I_{C+}$]$^T$ and a feedback signal y(t) = [$I'_{A+}$ $I'_{A-}$ $I'_{B+}$ $I'_{B-}$ $I'_{C+}$]$^T$ which represents the actual limb portion currents. In accordance with a control law $\boldsymbol{u_T}(t)$ = [$V_{A+}$ $V_{A-}$ $V_{B+}$ $V_{B-}$ $V_{C+}$ $V_{C-}$]$^{T,}$ the controller generates an actuator signal based on the difference between the reference and feedback signals, and provides the actuator signal to the plant. The plant is subject to external disturbances $\boldsymbol{d}(t)$ = [$V_{AB}$ $V_{CB}$ $V_{DC}$]$^T$.

However, none of the control system models of Figures 2 and 3 and the closed-loop control system of Figure 4 take into account the presence of any system delay in the control system. In particular it is evident from Figure 3 that no system delays are contemplated in the construction of the control law $u_T$(t). As a consequence, the stability and performance of the three-phase AC-DC converter 10 would be at risk when one or more system delays are present in the corresponding control system. Thus, in order to ensure high levels of stability and performance of the three-phase AC-DC converter 10, it is desirable to compensate for any system delay in the corresponding control system.

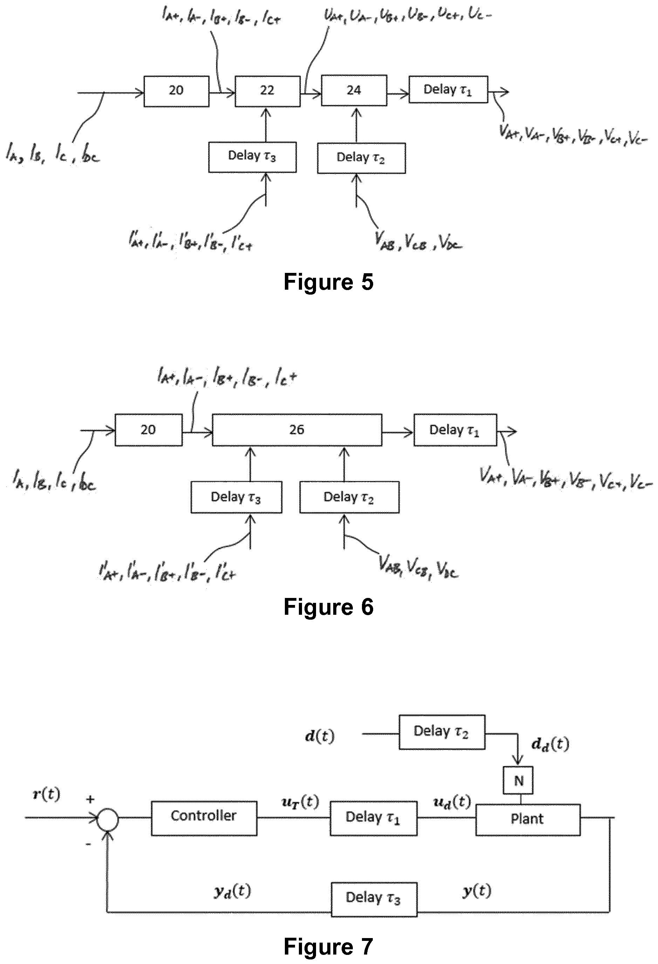

Figures 5 and 6 show schematically modified versions of the control system models of Figures 2 and 3 respectively, where the modified versions include multiple system delays in the form of measurement delays in obtaining the measured limb portion currents $I'_{A+}$, $I'_{A-}$, $I'_{B+}$, $I'_{B-}$, $I'_{C+}$, measurement delays in obtaining the measured external disturbances $V_{AB}$, $V_{CB}$, $V_{DC}$, and actuator delays in providing the actuator signals to the plant.

The control system models with multiple delays shown in Figures 5 and 6 can be represented by the closed-loop control system shown in Figure 7 which includes an actuator delay $\tau_1$ in providing the actuator signal to the plant, a measurement delay $\tau_3$ in obtaining the measured limb portion currents $I'_{A+}$, $I'_{A-}$, $I'_{B+}$, $I'_{B-}$, $I'_{C+}$, and a measurement delay $\tau_2$ in obtaining the measured external disturbances $V_{AB}$, $V_{CB}$, $V_{DC}$, with $\tau_1$, $\tau_2$, $\tau_3 > 0$.

The closed loop control system of Figure 7 can be described by a first state space representation using the following state-space equations:

$$\dot{\boldsymbol{x}}(t) = \boldsymbol{A}\,\boldsymbol{x}(t) + \boldsymbol{B}\,\boldsymbol{u_d}(t) + \boldsymbol{N}\,\boldsymbol{d_d}(t)$$

$$\boldsymbol{y_d}(t) = \boldsymbol{C}\,\boldsymbol{x}(t) \qquad\qquad (1)$$

where $\boldsymbol{x}$, $\boldsymbol{y_d}$, $\boldsymbol{u_d}$, $\boldsymbol{d_d}$ are time-dependent vectors, matrices A, B, C are constants, and $x = dx/dt$. The vector $x$ is called the state vector of the first state space representation, $\boldsymbol{y_d}$ is the output vector, $\boldsymbol{u_d}$ is the control action at the plant's input, and $\boldsymbol{d_d}$ is the measured disturbance vector. The control action $\boldsymbol{u_d}(t)$ represents a delayed version of the control law $\boldsymbol{u_T}(t)$ given by the control algorithm.

It is desirable to configure the closed-loop control system to attain asymptotic stability, which implies that from any given initial state, the system will converge to the zero state x(t) = 0 if no reference input is applied, i.e. for r(t) = 0. This feature, known as the regulation problem, prevents any disturbance, known or unknown, to the closed-loop control system from adversely affecting the closed-loop control system performance in steady-state.

Once the system is asymptotically stable, it is also desirable to configure the closed-loop control system to attain a stable and near-zero instantaneous deviation between the reference and feedback signals, which is known as the servo problem. In the first state representation, the output vector y(t) represents a measurement of the state x(t) of the plant by means of an invertible (or full-rank) matrix C. Hence, in this case, the servo problem can be used to make the state $\mathbf{x}$(t) of the plant track the reference signal $\mathbf{r}$(t).

By using the superposition principle, the total control law $\mathbf{u_T}$(t) applied to the plant can be interpreted as the sum of a feedforward control term $\mathbf{u_c}$(t) and a regulation plus servo control term $\mathbf{u}$(t). The feedforward control law $\mathbf{u_c}$(t) is configured to cancel out the effect of the known disturbance $\mathbf{d_d}$(t) on the states $\mathbf{x}$(t). The regulation plus servo control term $\mathbf{u}$(t) is configured to cancel out unknown disturbances while the state $\mathbf{x}$(t) track the reference signal $\mathbf{r}$(t). The terms $\mathbf{u_c}$(t) and $\mathbf{u}$(t) are treated independently since the measured disturbance $\mathbf{d_d}$(t) is assumed independent of the reference signal $\mathbf{r}$(t).

Therefore, taking into account the actuator and measurement delays $\tau_1, \tau_2, \tau_3$, the first state space representation is rewritten as:

$$\dot{\mathbf{x}}(t) = \mathbf{A}\,\mathbf{x}(t) + \mathbf{B}\,\mathbf{u_T}(t - \tau_1) + \mathbf{N}\,\mathbf{d}(t - \tau_2)$$

$$\mathbf{y}(t) = \mathbf{C}\,\mathbf{x}(t - \tau_3) \qquad\qquad (2)$$

where $\mathbf{d}$(t) is the disturbance signal without measurement delays. After applying the corrective feedforward term $\mathbf{u_c}$(t) that cancels out the known disturbance $\mathbf{d_d}$(t), the first state space representation can be further rewritten as

$$\dot{\mathbf{x}}(t) = \mathbf{A}\,\mathbf{x}(t) + \mathbf{B}\,\mathbf{u}(t - \tau_1)$$

$$\mathbf{y}(t) = \mathbf{C}\,\mathbf{x}(t - \tau_3) \tag{3}$$

It is evident from the foregoing that any given control actions are delayed by an amount of time equal to $\tau_1$ seconds before they can produce an effect on the plant. This actuator delay $\tau_1$ poses a potential threat to the stability of the closed-loop control system, since delaying the control action can produce increasingly large control actions in an attempt to match the feedback signal y(t) to the reference signal r(t). This effect may be made worse by measurement delays $\tau_3$, $\tau_2$ in the measured values y(t) and d(t). Hence, the combination of actuator and measurement delays $\tau_1$, $\tau_2$, $\tau_3$ constitute an important source of instability in closed-loop control systems.

Moreover the above problem is further complicated by the fact that the measurement delay $\tau_3$ does not allow the state vector x(t) to be directly measured at time t. This would require an estimate of x(t), denoted by $\hat{\mathbf{x}}(t)$, based on the available measurements $\mathbf{y}(t)$ in order to assert the performance of the servo problem when the state vector $\mathbf{x}(t)$ is to follow the reference signal $\mathbf{r}(t)$.

In order to solve the regulation and servo problems, there is provided a method of configuring the closed-loop control system in accordance with the invention. The method is described with reference to an exemplary continuous dynamic system.

Modern control system algorithms run in Digital Signal Processors (DSP). This implies that the control law $\mathbf{u}_T(t)$ is not applied continuously but in discrete steps given by the sampling time $T_s$ of the DSP. Hence the continuous dynamic system is to be sampled to produce a new discrete dynamic system. For simplicity reasons and without loss of generality, consider the first state space representation of (2) where $\tau_1 = 3T_s$, $\tau_2 = \tau_3 = T_s$ and $\mathbf{C}$ is the identity matrix of corresponding dimensions. The sampled version of (2) is given by:

$$\boldsymbol{x}(k+1) = \boldsymbol{\Phi}\,\boldsymbol{x}(k) + \boldsymbol{\Gamma}\,\boldsymbol{u}_T(k-3) + \boldsymbol{\Gamma}_N\,\boldsymbol{d}(k-1)$$

$$\boldsymbol{y}(k) = \boldsymbol{x}(k-1) \tag{4}$$

where the matrices $\Phi$, $\Gamma$, $\Gamma_N$ are given by:

$$\boldsymbol{\Phi} = \mathrm{e}^{A T_s}$$

$$\boldsymbol{\Gamma} = \int_0^{T_s} \mathrm{e}^{As}\,\mathrm{d}s\,\mathbf{B}$$

$$\boldsymbol{\Gamma}_N = \int_0^{T_s} \mathrm{e}^{As}\,\mathrm{d}s\,\mathbf{N} \tag{5}$$

Non-integer system delays can be easily included in the dynamic system by expressing the evolution of the state variables as a function of a fraction of the command law $\boldsymbol{u}_T(k)$ at the corresponding time instant.

As mentioned in the previous section, the measured disturbance $\boldsymbol{d}(k)$ can be cancelled out by configuring the feedforward control term to take the form of:

$$\boldsymbol{u}_C(k) = -(\boldsymbol{\Gamma}^\mathrm{T}\boldsymbol{\Gamma})^{-1}\boldsymbol{\Gamma}^\mathrm{T}\,\boldsymbol{\Gamma}_N\,\boldsymbol{d}(k-1) \tag{6}$$

where matrix $(\Gamma^\mathrm{T}\Gamma)^{-1}\Gamma^\mathrm{T}$ is called the *pseudoinverse* of $\Gamma$.

Therefore, the regulation plus servo problem for the sampled version of (4) is given by the following dynamic system:

$$x(k+1) = \Phi\, x(k) + \Gamma\, u(k-3)$$

$$y(k) = x(k-1) \qquad (7)$$

For computational simplicity, it is convenient to choose the control law such that it is linear with the measured $x(k)$. When $x(k)$ cannot be directly measured, its estimate $\hat{x}(k)$ is to be produced based on the available measured parameters and/or known parameters of the dynamic model, namely

$$\hat{x}(k) = \Phi\, y(k) + \Gamma\, u(k-4) \qquad (8)$$

Therefore the control law is given by

$$u(k) = -K_1\, w(k) + K_2\, [r(k) - \hat{x}(k)] \qquad (9)$$

where $w(k)$ is some state vector to be defined. The control law of (9) regulates $w(k)$ and it makes $\hat{x}(k)$ follow the reference $r(k)$. In particular, if $r(k) = 0$ then $\hat{x}(k)$ is also driven to zero (i.e., regulation of $\hat{x}(k)$) when the control law is chosen such that the closed-loop system is asymptotically stable.

Linear control laws assume that the measured state is measured in the current time step $k$. For that purpose, the following augmented state vector is defined:

$$z(k) = \begin{bmatrix} w(k) \\ \hat{x}(k) \end{bmatrix} \qquad (10)$$

Hence (9) is rewritten as:

$$u(k) = -K\, z(k) + K \begin{bmatrix} 0 \\ r(k) \end{bmatrix} \qquad (11)$$

with

$$K = [K_1 \quad K_2] \qquad (12)$$

The advantage of the form used in (11) is that it permits the use of a non-delayed measurement to create a control law $u(k)$. Therefore, it is straightforward to create an asymptotically stable and optimal control law for such a system without delay.

As a matter of exemplification, the control law is optimised to minimise the quadratic weighted sum of the state vector $z(k)$ and the control law $u(k)$ from time instant $k$ to time instant $k + N$ - 1, for some positive integer $N$. Namely, let us find $K$ such that

$$u(k) = -K\, z(k)$$

$$\min J(k) = \sum_{i=k}^{k+N-1} [z^T(k)\, Q\, z(k) + u^T(k)\, R\, u(k)] \qquad (13)$$

The value of $K$ that solves for (13) is the well-known linear quadratic regulator control gain.

This in turn enables the design of a stable and optimal control law through the transformation of the first state space representation with multiple system delays into a second, augmented state space representation of the control system without any system delays. This can be achieved by applying the following transformation to the dynamic system defined in (7):

$$\begin{bmatrix} u(k) \\ u(k-1) \\ u(k-2) \\ y(k) \\ x(k) \\ x(k+1) \end{bmatrix} = \begin{bmatrix} 0 & 0 & 0 & 0 & 0 & 0 \\ I & 0 & 0 & 0 & 0 & 0 \\ 0 & I & 0 & 0 & 0 & 0 \\ 0 & 0 & 0 & 0 & I & 0 \\ 0 & 0 & 0 & 0 & 0 & I \\ 0 & 0 & \Gamma & 0 & 0 & \Phi \end{bmatrix} \begin{bmatrix} u(k-1) \\ u(k-2) \\ u(k-3) \\ y(k-1) \\ x(k-1) \\ x(k) \end{bmatrix} + \begin{bmatrix} I \\ 0 \\ 0 \\ 0 \\ 0 \\ 0 \end{bmatrix} u(k) \qquad (14)$$

which can be written as

$$z(k+1) = \mathbf{\Phi}_z\, z(k) + \mathbf{\Gamma}_z\, u(k) \qquad (15)$$

with

$$z(k) = \begin{bmatrix} u(k-1) \\ u(k-2) \\ u(k-3) \\ y(k-1) \\ x(k-1) \\ x(k) \end{bmatrix} \qquad (16)$$

$$\mathbf{\Phi}_z = \begin{bmatrix} 0 & 0 & 0 & 0 & 0 & 0 \\ I & 0 & 0 & 0 & 0 & 0 \\ 0 & I & 0 & 0 & 0 & 0 \\ 0 & 0 & 0 & 0 & I & 0 \\ 0 & 0 & 0 & 0 & 0 & I \\ 0 & 0 & \Gamma & 0 & 0 & \Phi \end{bmatrix} \qquad (17)$$

$$\mathbf{\Gamma}_z = \begin{bmatrix} I \\ 0 \\ 0 \\ 0 \\ 0 \\ 0 \end{bmatrix} \qquad (18)$$

Hence it is straightforward to derive a stable and optimal control law $u(k)$ for the augmented state space representation of the control system of (15), where the control law takes the form:

$$u(k) = -K\, z(k) \qquad (19)$$

The control law stated in (19) may not necessarily be linearly dependent on the vector $z(k)$.
From (10), it can be seen that $z(k)$ is composed of $w(k)$ and $\hat{x}(k)$. Using (16), it can be observed that

$$w(k) = \begin{bmatrix} u(k-1) \\ u(k-2) \\ u(k-3) \\ y(k-1) \\ x(k-1) \end{bmatrix} \qquad (20)$$

$\hat{x}(k)$ is provided as a feedback in place of the state $x(k)$, since as mentioned above the latter cannot be measured at time instant $k$ due to the presence of the measurement delay.

For deterministic or slow-varying references, $r(k)$ can be time-advanced or predicted in order to have the state estimate $\hat{x}(k)$ match the reference at the next instant of time $k + 1$.

By time advancing it is meant that a signal $r(k)$ can be processed to produce a new signal whose present value matches that of $r(k)$ at a future time. For example, a 1-sample phase advance of $r(k)$ would produce a signal in the time step $k$ whose value equals that of $r(k + 1)$. This enables the closed-loop control system to attain a stable and near-zero instantaneous deviation between the reference and feedback signals.

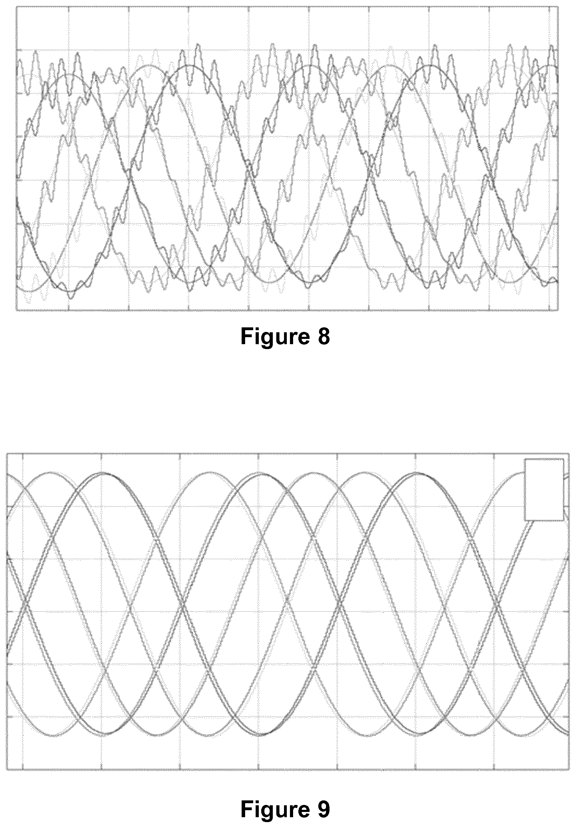

Figure 8 shows a graph of a simulated system response of a closed-loop control system subject to linear quadratic regulator control when system delays are not taken into account in the configuration of the closed-loop control system.

Figure 9 shows a graph of a simulated system response of the same closed-loop control system subject to linear quadratic regulator control but when system delays are taken into account in the configuration of the closed-loop control system.

In both Figures 8 and 9, the simulations are carried out for the case $\tau_1 = 3T_s$, $\tau_2 = \tau_3 = T_s$.

It is observed from Figure 8 that the state of the plant generally follows the sinusoidal reference signals with a pronounced oscillation, which is unacceptable from a signal quality perspective. In contrast it can be observed from Figure 9 that the state of the plant closely tracks the sinusoidal reference signals with no oscillation.

The foregoing method of configuring a closed-loop control system, which is directed to the combination of delay compensation and time-advancing processes, not only improves the stability and performance of the plant in a computationally-efficient manner but also enables the closed-loop control system to attain a stable and near-zero instantaneous deviation between the reference and feedback signals.

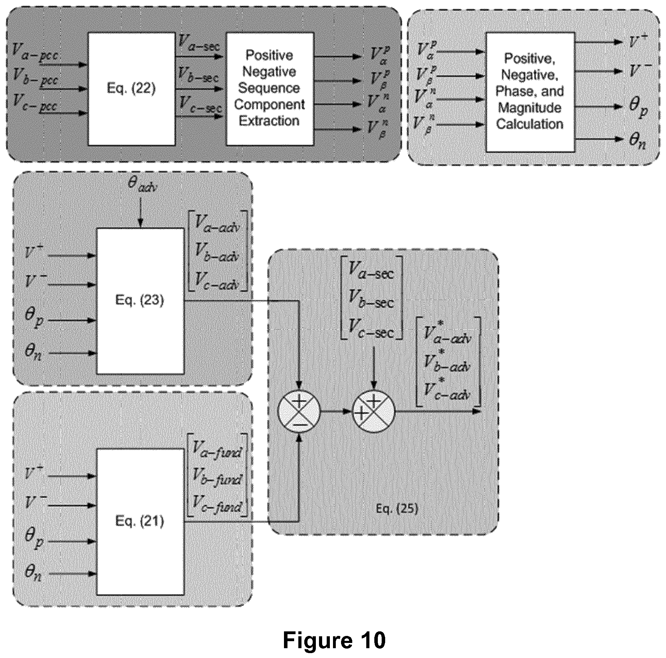

The closed loop control system may include a phase advance block (not shown) configured to implement the following phase advancing process in a-b-c stationary reference frame. Figure 10 shows schematically a block diagram of the phase advancing process implemented in a-b-c stationary reference frame.

The fundamental frequency components of the AC grid voltages can be expressed as follows:

$$\begin{bmatrix} V_{a-fund} \\ V_{b-fund} \\ V_{c-fund} \end{bmatrix} = \begin{bmatrix} V^+ \sin(\omega t + \theta_p) + V^- \sin(\omega t + \theta_n) \\ V^+ \sin(\omega t - 120^o + \theta_p) + V^- \sin(\omega t + 120^o + \theta_n) \\ V^+ \sin(\omega t + 120^o + \theta_p) + V^- \sin(\omega t - 120^o + \theta_n) \end{bmatrix} \quad (21)$$

where $V^+$, $V^-$, $\theta_p$, $\theta_n$, and $\omega$ represent the positive and negative sequence voltage amplitude, phase angle, and angular frequency, respectively. Zero sequence voltage components are not considered in (21), since the star-delta configuration of the transformer prevents zero sequence voltage components on the primary side of the transformer from appearing on the secondary side of the transformer. Hence, the three-phase to ground voltage at the secondary side of the transformer can be calculated as in (22) to cancel the zero sequence voltage components.

$$\begin{bmatrix} V_{a-sec} \\ V_{b-sec} \\ V_{c-sec} \end{bmatrix} = \frac{1}{3} \cdot \begin{bmatrix} 1 & 0 & -1 \\ -1 & 1 & 0 \\ 0 & -1 & 1 \end{bmatrix} \cdot \begin{bmatrix} V_{a-pcc} - V_{b-pcc} \\ V_{b-pcc} - V_{c-pcc} \\ V_{c-pcc} - V_{a-pcc} \end{bmatrix} \quad (22)$$

where $V_{a-pcc}$, $V_{b-pcc}$, $V_{c-pcc}$, $V_{a-sec}$, $V_{b-sec}$, and $V_{c-sec}$ are the measured three-phase to ground voltages at the point of common coupling (PCC) and the calculated three phase to ground voltages at the secondary side of the transformer, respectively. The $V^+$, $V^-$, $\theta_p$, $\theta_n$, and $\omega$ is calculated from the $V_{a-sec}$, $V_{b-sec}$, and $V_{c-sec}$.

The phase-advanced three-phase AC grid voltages can be expressed as follows:

$$\begin{bmatrix} V_{a-adv} \\ V_{b-adv} \\ V_{c-adv} \end{bmatrix} = \begin{bmatrix} V^+ \sin(\omega t + \theta_p + \theta_{adv}) + V^- \sin(\omega t + \theta_n + \theta_{adv}) \\ V^+ \sin(\omega t - 120^o + \theta_p + \theta_{adv}) + V^- \sin(\omega t + 120^o + \theta_n + \theta_{adv}) \\ V^+ \sin(\omega t + 120^o + \theta_p + \theta_{adv}) + V^- \sin(\omega t - 120^o + \theta_n + \theta_{adv}) \end{bmatrix} \quad (23)$$

and

$$\theta_{adv} = n \, \frac{360}{(1/f_o)/T_s} \qquad (24)$$

where $\theta_{adv}, f_o, T_s$ are the value of the phase advance angle, fundamental frequency, and control sample time, respectively. The value of 'n' may be an integer or otherwise as long as the value of 'n' is larger than 0. The magnitude of the positive and negative components $V^+$, $V^-$ of the modified plurality of measured AC phase voltages $V_{a\text{-}sec}$, $V_{b\text{-}sec}$, and $V_{c\text{-}sec}$ may be extracted by using a low pass filter, which will introduce a delay. To overcome this delay, a phase advance value is obtained from the difference between the plurality of fundamental frequency components of the AC network phase voltages of the AC network of (21) and the plurality of phase-advanced AC network phase voltages of the AC network of (23), and the phase advance value is combined with the plurality of measured AC phase voltages to obtain a plurality of phase-advanced AC phase voltages, as follows:

$$\begin{bmatrix} V_{a-adv}^{*} \\ V_{b-adv}^{*} \\ V_{c-adv}^{*} \end{bmatrix} = \begin{bmatrix} V_{a-sec} \\ V_{b-sec} \\ V_{c-sec} \end{bmatrix} + \begin{bmatrix} V_{a-adv} - V_{a-fund} \\ V_{b-adv} - V_{b-fund} \\ V_{c-adv} - V_{c-fund} \end{bmatrix} \qquad (25)$$

The plurality of phase-advanced AC phase voltages is feedforwarded from the phase advance block to the output of the controller. The plurality of phase-advanced AC phase voltages is then summed with the actuator signal to produce a modified actuator signal, which is dispatched to the plant.

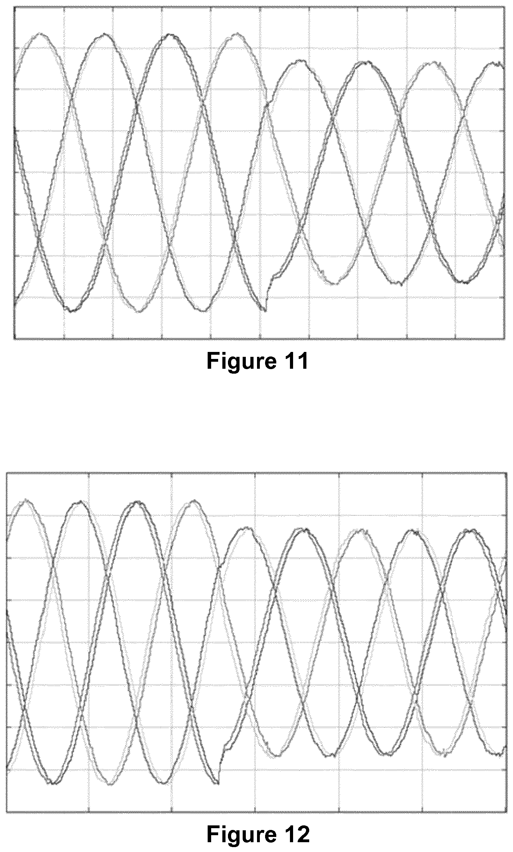

Figures 11 and 12 show graphs of a simulated tracking response of a closed-loop control system subject to the phase advancing process, with different phase advance values of 3 and 5 samples respectively. The value of n in (24) is set to be equal to 3.

At time = 2.486, the AC grid voltage is reduced by 30% to test the performance of the phase advancing process during sudden change in the grid voltages at the PCC.

It can be seen from Figures 11 and 12 that the three-phase voltages are predicted with the right phase advance values and magnitude. It follows that the phase advancing process is stable and efficient despite the presence of harmonics and the sudden change of the AC grid voltage.

The foregoing phase advancing process provides compensation for phase shift and gain attenuation caused by at least one system delay (such as a measurement delay, a computational delay, and an actuator delay). This in turn improves the converter dynamics performance during AC network voltage fluctuations and enables the converter to cope with unbalanced operating conditions of the AC network voltages.

Moreso, the representation of each of the AC phase voltages and AC network phase voltages in the a-b-c stationary reference frame removes the requirement for a phase locked loop control for the converter. This has the advantages of:

overcoming the difficulty of PLL control in synchronising a converter and a weak AC network with one another;

obtaining higher bandwidth of the closed-loop control system for fast tracking of the reference signal, since there is no added delay in the feedback signal as a consequence of extracting positive and negative sequence components as required in d-q synchronous reference frame control;

obviates the need to compensate for harmonic distortion in multi-phase AC systems (e.g. fifth and seventh harmonics in three-phase AC systems), as the plurality of measured AC phase voltages can be feedforwarded to the output of the controller; and

addressing AC network voltage frequency variation without the need for adaptive filters.

It will be appreciated that, by omitting the cancellation of the zero sequence voltage components, the aforementioned phase advancing process is applicable mutatis mutandis to embodiments of the invention in which zero sequence voltage components on the primary side of the transformer are not prevented from appearing on the secondary side of the transformer, such as when the transformer has a star-star configuration.

## Claims

1. A method of configuring a closed-loop control system, the control system comprising a controller and a converter (10), the controller configured to provide an actuator signal to the converter (10), the controller configured to receive a reference signal (**r**) and a feedback signal (**y**), the feedback signal (**y**) derived from a state (**x**) of the converter (10), wherein an AC side of the converter (10) is operatively connected to a multi-phase AC network, the method comprising the steps of:

measuring a plurality of AC phase voltages ($V_{a\text{-}pcc}$, $V_{b\text{-}pcc}$, $V_{c\text{-}pcc}$) at the AC side of the converter (10);

obtaining a phase advance value equal to the difference between a plurality of fundamental frequency components ($V_{a\text{-}fund}$, $V_{b\text{-}fund}$, $V_{c\text{-}fund}$) of the AC network phase voltages of the AC network and a plurality of phase-advanced AC network phase voltages ($V_{a\text{-}adv}$, $V_{b\text{-}adv}$, $V_{c\text{-}adv}$) of the AC network;

obtaining a plurality of phase-advanced AC phase voltages $\left(V_{a-adv}^{*}, V_{b-adv}^{*}, V_{c-adv}^{*}\right)$ by combining the phase advance value with the plurality of measured AC phase voltages ($V_{a\text{-}sec}$, $V_{b\text{-}sec}$, $V_{c\text{-}sec}$);

obtaining a modified actuator signal by combining the plurality of phase-advanced AC phase voltages $\left(V_{a-adv}^{*}, V_{b-adv}^{*}, V_{c-adv}^{*}\right)$ with the actuator signal;

providing the modified actuator signal to the converter (10),

wherein each of the AC phase voltages and AC network phase voltages ( $V_{a\text{-}sec}$, $V_{b\text{-}sec}$, $V_{c\text{-}sec}$, $V_{a-adv}^{*}$, $V_{b-adv}^{*}$, $V_{c-adv}^{*}$, $V_{a\text{-}adv}$, $V_{b\text{-}adv}$, $V_{c\text{-}adv}$, $V_{a\text{-}fund}$, $V_{b\text{-}fund}$, $V_{c\text{-}fund}$ ) is represented in the a-b-c stationary reference frame.

2. A method according to Claim 1 wherein the multi-phase AC network and converter (10) are respectively operatively connected to primary and secondary sides of a transformer, the transformer configured to prevent zero sequence voltage components on the primary side of the transformer from appearing on the secondary side of the transformer, wherein the method includes the steps of:

measuring the plurality of AC phase voltages ($V_{a\text{-}pcc}$, $V_{b\text{-}pcc}$, $V_{c\text{-}pcc}$) at the primary side of the transformer;

obtaining a modified plurality of measured AC phase voltages ($V_{a\text{-}sec}$, $V_{b\text{-}sec}$, $V_{c\text{-}sec}$) by cancelling a plurality of zero sequence voltage components from the plurality of measured AC phase voltages ($V_{a\text{-}pcc}$, $V_{b\text{-}pcc}$, $V_{c\text{-}pcc}$);

obtaining the plurality of phase-advanced AC phase voltages $\left(V_{a-adv}^{*}, V_{b-adv}^{*}, V_{c-adv}^{*}\right)$ by combining the phase advance value with the modified plurality of measured AC phase voltages ($V_{a\text{-}sec}$, $V_{b\text{-}sec}$, $V_{c\text{-}sec}$).

3. A closed-loop control system comprising a controller and a converter (10), the controller configured to provide an actuator signal to the converter (10), the controller configured to receive a reference signal (**r**) and a feedback signal (**y**), the feedback signal (**y**) derived from a state (**x**) of the converter (10), wherein an AC side of the converter (10) is operatively connected to a multi-phase AC network, wherein the control system is configured to:

receive a plurality of AC phase voltages ($V_{a\text{-}pcc}$, $V_{b\text{-}pcc}$, $V_{c\text{-}pcc}$) measured at the AC side of the converter (10);

obtain a phase advance value equal to the difference between a plurality of fundamental frequency components ($V_{a\text{-}fund}$, $V_{b\text{-}fund}$, $V_{c\text{-}fund}$) of the AC network phase voltages of the AC network and a plurality of phase-advanced AC network phase voltages ($V_{a\text{-}adv}$, $V_{b\text{-}adv}$, $V_{c\text{-}adv}$) of the AC network;

obtain a plurality of phase-advanced AC phase voltages $\left(V_{a-adv}^{*}, V_{b-adv}^{*}, V_{c-adv}^{*}\right)$ by combining the phase advance value with the plurality of measured AC phase voltages ($V_{a\text{-}sec}$, $V_{b\text{-}sec}$, $V_{c\text{-}sec}$);

obtain a modified actuator signal by combining the plurality of phase-advanced AC phase voltages $\left(V_{a-adv}^{*}, V_{b-adv}^{*}, V_{c-adv}^{*}\right)$ with the actuator signal;

provide the modified actuator signal to the converter (10),

wherein each of the AC phase voltages and AC network phase voltages ( $V_{a\text{-}sec}$, $V_{b\text{-}sec}$, $V_{c\text{-}sec}$, $V_{a-adv}^{*}$, $V_{b-adv}^{*}$, $V_{c-adv}^{*}$, $V_{a\text{-}adv}$, $V_{b\text{-}adv}$, $V_{c\text{-}adv}$, $V_{a\text{-}fund}$, $V_{b\text{-}fund}$, $V_{c\text{-}fund}$ ) is represented in the a-b-c stationary reference frame.

**Patentansprüche**

1. Verfahren zum Konfigurieren eines Regelungssystems, wobei das Regelungssystem eine Steuerung und einen Wandler (10) aufweist, wobei die Steuerung eingerichtet ist, um ein Aktuatorsignal an den Wandler (10) zu liefern, wobei die Steuerung eingerichtet ist, um ein Referenzsignal **(r)** und ein Rückführungssignal **(y)** zu empfangen, wobei das Rückführungssignal **(y)** von einem Zustand **(x)** des Wandlers (10) abgeleitet ist, wobei eine Wechselspannungsseite des Wandlers (10) mit einem mehrphasigen Wechselspannungsnetzwerk betriebsmäßig verbunden ist, wobei das Verfahren die Schritte aufweist:

Messen mehrerer Wechselspannungs-Phasenspannungen ($V_{a\text{-}pcc}, V_{b\text{-}pcc}, V_{c\text{-}pcc}$) auf der Wechselspannungsseite des Wandlers (10) ;

Erhalten eines Phasenvorauseilwertes, der gleich der Differenz zwischen mehreren Grundfrequenzkomponenten ($V_{a\text{-}fund}, V_{b\text{-}fund}, V_{c\text{-}fund}$) der Wechselspannungsnetzwerk-Phasenspannungen des Wechselspannungsnetzwerkes ist, und mehrerer phasenmäßig vorauseilender Wechselspannungsnetzwerk-Phasenspannungen ($V_{a\text{-}adv}, V_{b\text{-}adv}, V_{c\text{-}adv}$) des Wechselspannungsnetzwerks;

Erhalten mehrerer phasenmäßig vorauseilender Wechselspannungs-Phasenspannungen $(V_{a-adv}^{*}, V_{b-adv}^{*}, V_{c-adv}^{*})$ durch Kombination des Phasenvorauseilwertes mit den mehreren gemessenen Wechselspannungs-Phasenspannungen ($V_{a\text{-}sec}, V_{b\text{-}sec}, V_{c\text{-}sec}$) ;

Erhalten eines modifizierten Aktuatorsignals durch Kombination der mehreren phasenmäßig vorauseilenden Wechselspannungs-Phasenspannungen $(V_{a-adv}^{*}, V_{b-adv}^{*}, V_{c-adv}^{*})$ mit dem Aktuatorsignal;

Liefern des modifizierten Aktuatorsignals an den Wandler (10) ;

wobei jede der Wechselspannungs-Phasenspannungen und der Wechselspannungsnetzwerk-Phasenspannungen ($V_{a\text{-}sec}$, $V_{b\text{-}sec}$, $V_{c\text{-}sec}$, $V_{a-adv}^{*}$, $V_{b-adv}^{*}$, $V_{c-adv}^{*}$, $V_{a\text{-}adv}$, $V_{b\text{-}adv}$, $V_{c\text{-}adv}$, $V_{a\text{-}fund}$, $V_{b\text{-}fund}$, $V_{c\text{-}fund}$) in dem stationären Referenzrahmen a-b-c dargestellt ist.

2. Verfahren nach Anspruch 1, wobei das mehrphasige Wechselspannungsnetzwerk und der Wandler (10) jeweils mit einer primären und einer sekundären Seite eines Transformators betriebsmäßig verbunden sind, wobei der Transformator eingerichtet ist, um zu verhindern, dass Nullsequenzspannungskomponenten auf der Primärseite des Transformators auf der Sekundärseite des Transformators erscheinen, wobei das Verfahren die Schritte enthält:

Messen der mehreren Wechselspannungs-Phasenspannungen ($V_{a\text{-}pcc}, V_{b\text{-}pcc}, V_{c\text{-}pcc}$) auf der Primärseite des Transformators;

Erhalten mehrerer modifizierter gemessener Wechselspannungs-Phasenspannungen ($V_{a\text{-}sec}, V_{b\text{-}sec}, V_{c\text{-}sec}$) durch Auslöschung mehrerer Nullsequenzspannungskomponenten aus den mehreren gemessenen Wechselspannungs-Phasenspannungen ($V_{a\text{-}pcc}, V_{b\text{-}pcc}, V_{c\text{-}pcc}$);

Erhalten der mehreren phasenmäßig vorauseilenden Wechselspannungs-Phasenspannungen $(V_{a-adv}^{*}, V_{b-adv}^{*}, V_{c-adv}^{*})$ durch Kombination des Phasenvorauseilwertes mit den modifizierten mehreren gemessenen Wechselspannungs-Phasenspannungen ($V_{a\text{-}sec}$, $V_{b\text{-}sec}$, $V_{c\text{-}sec}$).

3. Regelungssystem, das eine Steuerung und einen Wandler (10) aufweist, wobei die Steuerung eingerichtet ist, um ein Aktuatorsignal an den Wandler (10) zu liefern, wobei die Steuerung eingerichtet ist, um ein Referenzsignal (r) und ein Rückführungssignal **(y)** zu empfangen, wobei das Rückführungssignal **(y)** von einem Zustand **(x)** des Wandlers (10) abgeleitet ist, wobei eine Wechselspannungsseite des Wandlers (10) mit einem mehrphasigen Wechselspannungsnetzwerk betriebsmäßig verbunden ist, wobei das Regelungssystem eingerichtet ist, um:

mehrere Wechselspannungs-Phasenspannungen ($V_{a\text{-}pcc}, V_{b\text{-}pcc}, V_{c\text{-}pcc}$) zu empfangen, die auf der Wechselspannungsseite des Wandlers (10) gemessen werden;

einen Phasenvorauseilwert, der gleich der Differenz zwischen mehreren Grundfrequenzkomponenten ($V_{a\text{-}fund}, V_{b\text{-}fund}, V_{c\text{-}fund}$) der Wechselspannungsnetzwerk-Phasenspannungen des Wechselspannungsnetzwerks ist, und mehrere phasenmäßig vorauseilende Wechselspannungsnetzwerk-Phasenspannungen ($V_{a\text{-}adv}, V_{b\text{-}adv}, V_{c\text{-}adv}$) des Wechselspannungsnetzwerks zu erhalten;

mehrere phasenmäßig vorauseilende Wechselspannungs-Phasenspannungen $(V_{a-adv}^{*}, V_{b-adv}^{*}, V_{c-adv}^{*})$ durch Kombination des Phasenvorauseilwertes mit den mehreren gemessenen Wechselspannungs-Phasenspannungen ($V_{a\text{-}sec}, V_{b\text{-}sec}, V_{c\text{-}sec}$) zu erhalten;

ein modifiziertes Aktuatorsignal durch Kombination der mehreren phasenmäßig vorauseilenden Wechselspannungs-Phasenspannungen $(V_{a-adv}^{*}, V_{b-adv}^{*}, V_{c-adv}^{*})$ mit dem Aktuatorsignal zu erhalten;

das modifizierte Aktuatorsignal an den Wandler (10) zu liefern,

wobei jede der Wechselspannungs-Phasenspannungen und der Wechselspannungsnetzwerk-Phasenspannungen ($V_{a\text{-}sec}$, $V_{b\text{-}sec}$, $V_{c\text{-}sec}$, $V^*_{a-adv}$, $V^*_{b-adv}$, $V^*_{c-adv}$, **$V_{a\text{-}adv}$**, **$V_{b\text{-}adv}$**, **$V_{c\text{-}adv}$**, **$V_{a\text{-}fund}$**, **$V_{b\text{-}fund}$**, $V_{c\text{-}fund}$) in dem stationären Referenzrahmen a-b-c dargestellt ist.

## Revendications

1. Procédé de configuration d'un système de commande en boucle fermée, le système de commande comprenant un dispositif de commande et un convertisseur (10), le dispositif de commande étant configuré pour fournir un signal d'actionneur au convertisseur (10), le dispositif de commande étant configuré pour recevoir un signal de référence (r) et un signal de rétroaction (y), le signal de rétroaction (y) étant dérivé d'un état (x) du convertisseur (10), dans lequel un côté CA du convertisseur (10) est raccordé de manière fonctionnelle à un réseau CA multiphase, le procédé comprenant les étapes consistant à :

mesurer une pluralité de tensions de phase CA ($V_{a\text{-}pcc}$, $V_{b\text{-}pcc}$, $V_{c\text{-}pcc}$) au niveau du côté CA du convertisseur (10) ;
obtenir une valeur d'avance de phase égale à la différence entre une pluralité de composants de fréquence fondamentale ($V_{a\text{-}fund}$, $V_{b\text{-}fund}$, $V_{c\text{-}fund}$) des tensions de phase de réseau CA du réseau CA et une pluralité de tensions de phase de réseau CA de phase avancée ($V_{a\text{-}adv}$, $V_{b\text{-}adv}$, $V_{c\text{-}adv}$) du réseau CA ;
obtenir une pluralité de tensions de phase CA de phase avancée $(V^*_{a-adv}, V^*_{b-adv}, V^*_{c-adv})$ en combinant la valeur d'avance de phase avec la pluralité de tensions de phase CA mesurées ($V_{a\text{-}sec}$, $V_{b\text{-}sec}$, $V_{c\text{-}sec}$) ;
obtenir un signal d'actionneur modifié en combinant la pluralité de tensions de phase CA de phase avancée $(V^*_{a-adv}, V^*_{b-adv}, V^*_{c-adv})$ avec le signal d'actionneur ;
fournir le signal d'actionneur modifié au convertisseur (10),
dans lequel chacune des tensions de phase CA et des tensions de phase de réseau CA ( $V_{a\text{-}sec}$, $V_{b\text{-}sec}$, $V_{c\text{-}sec}$ $V^*_{a-adv}$, $V^*_{b-adv}$, $V^*_{c-adv}$, $V_{a\text{-}adv}$, $V_{b\text{-}adv}$, $V_{c\text{-}adv}$, $V_{a\text{-}fund}$, $V_{b\text{-}fund}$, $V_{c\text{-}fund}$ ) est représentée dans le cadre de référence stationnaire a-b-c.

2. Procédé selon la revendication 1, dans lequel le réseau CA multiphase et le convertisseur (10) sont respectivement raccordés de manière fonctionnelle à des côtés primaire et secondaire d'un transformateur, le transformateur étant configuré pour empêcher des composants de tension de séquence nulle sur le côté primaire du transformateur d'apparaître sur le côté secondaire du transformateur, dans lequel le procédé inclut les étapes consistant à :

mesurer la pluralité de tensions de phase CA ($V_{a\text{-}pcc}$, $V_{b\text{-}pcc}$, $V_{c\text{-}pcc}$) au niveau du côté primaire du transformateur ;
obtenir une pluralité modifiée de tensions de phase CA mesurées ($V_{a\text{-}sec}$, $V_{b\text{-}sec}$, $V_{c\text{-}sec}$) en annulant une pluralité de composants de tension de séquence nulle de la pluralité de tensions de phase CA mesurées ($V_{a\text{-}pcc}$, $V_{b\text{-}pcc}$, $V_{c\text{-}pcc}$) ;
obtenir la pluralité de tensions de phase CA de phase avancée $(V^*_{a-adv}, V^*_{b-adv}, V^*_{c-adv})$ en combinant la valeur d'avance de phase avec la pluralité modifiée de tensions de phase CA mesurées ($V_{a\text{-}sec}$, $V_{b\text{-}sec}$, $V_{c\text{-}sec}$).

3. Système de commande en boucle fermée comprenant un dispositif de commande et un convertisseur (10), le dispositif de commande étant configuré pour fournir un signal d'actionneur au convertisseur (10), le dispositif de commande étant configuré pour recevoir un signal de référence (r) et un signal de rétroaction (y), le signal de rétroaction (y) étant dérivé d'un état (x) du convertisseur (10), dans lequel un côté CA du convertisseur (10) est raccordé de manière fonctionnelle à un réseau CA multiphase, dans lequel le système de commande est configuré pour :

recevoir une pluralité de tensions de phase CA ($V_{a\text{-}pcc}$, $V_{b\text{-}pcc}$, $V_{c\text{-}pcc}$) mesurées au niveau du côté CA du convertisseur (10) ;
obtenir une valeur d'avance de phase égale à la différence entre une pluralité de composants de fréquence fondamentale ($V_{a\text{-}fund}$, $V_{b\text{-}fund}$, $V_{c\text{-}fund}$) des tensions de phase de réseau CA du réseau CA et une pluralité de tensions de phase de réseau CA de phase avancée ($V_{a\text{-}adv}$, $V_{b\text{-}adv}$, $V_{c\text{-}adv}$) du réseau CA ;
obtenir une pluralité de tensions de phase CA de phase avancée $(V^*_{a-adv}, V^*_{b-adv}, V^*_{c-adv})$ en combinant la

valeur d'avance de phase avec la pluralité de tensions de phase CA mesurées ($V_{a\text{-}sec}$, $V_{b\text{-}sec}$, $V_{c\text{-}sec}$) ;

obtenir un signal d'actionneur modifié en combinant la pluralité de tensions de phase CA de phase avancée $(V_{a-adv}^{*}, V_{b-adv}^{*}, V_{c-adv}^{*})$ avec le signal d'actionneur ;

fournir le signal d'actionneur modifié au convertisseur (10),

dans lequel chacune des tensions de phase CA et des tensions de phase de réseau CA ( $V_{a\text{-}sec}$, $V_{b\text{-}sec}$, $V_{c\text{-}sec}$ $V_{a-adv}^{*}$, $V_{b-adv}^{*}$, $V_{c-adv}^{*}$, $V_{a\text{-}adv}$, $V_{b\text{-}adv}$, $V_{c\text{-}adv}$, $V_{a\text{-}fund}$, $V_{b\text{-}fund}$, $V_{c\text{-}fund}$ ) est représentée dans le cadre de référence stationnaire a-b-c.

**Figure 1**

$I_{A+}, I_{A-}, I_{B+}, I_{B-}, I_{C+}$

$U_{A+}, U_{A-}, U_{B+}, U_{B-}, U_{C+}, U_{C-}$

20  22  24

$I_A, I_B, I_C, bc$

$V_{A+}, V_{A-}, V_{B+}, V_{B-}, V_{C+}, V_{C-}$

$I'_{A+}, I'_{A-}, I'_{B+}, I'_{B-}, I'_{C+}$

$V_{AB}, V_{CB}, V_{bc}$

**Figure 2**

$I_{A+}, I_{A-}, I_{B+}, I_{B-}, I_{c+}$

$V_{A+}, V_{A-}, V_{B+}, V_{B-}, V_{C+}, V_{C-}$

20  26

$I_A, I_B, I_C, bc$

$I'_{A+}, I'_{A-}, I'_{B+}, I'_{B-}, I'_{C+}$

$V_{AB}, V_{CB}, V_{bc}$

**Figure 3**

$d(t)$

N

$r(t)$  +  Controller  $u_T(t)$  Plant

−

$y(t)$

**Figure 4**

17

$I_{A+}, I_{A-}, I_{B+}, I_{B-}, I_{C+}$

$U_{A+}, U_{A-}, U_{B+}, U_{B-}, U_{C+}, U_{C-}$

$I_A, I_B, I_C, bc$

| 20 | → | 22 | → | 24 | → | Delay $\tau_1$ | → |

$V_{A+}, V_{A-}, V_{B+}, V_{B-}, V_{C+}, V_{C-}$

Delay $\tau_3$     Delay $\tau_2$

$I'_{A+}, I'_{A-}, I'_{B+}, I'_{B-}, I'_{C+}$     $V_{AB}, V_{CB}, V_{bc}$

**Figure 5**

$I_{A+}, I_{A-}, I_{B+}, I_{B-}, I_{C}+$

$I_A, I_B, I_C, bc$

| 20 | → | 26 | → | Delay $\tau_1$ | → |

$V_{A+}, V_{A-}, V_{B+}, V_{B-}, V_{C+}, V_{C-}$

Delay $\tau_3$     Delay $\tau_2$

$I'_{A+}, I'_{A-}, I'_{B+}, I'_{B-}, I'_{C+}$     $V_{AB}, V_{CB}, V_{bc}$

**Figure 6**

$d(t)$ —— Delay $\tau_2$ ——→ $d_d(t)$

N

$r(t)$ + — Controller — $u_T(t)$ — Delay $\tau_1$ — $u_d(t)$ — Plant

$y_d(t)$ — Delay $\tau_3$ — $y(t)$

**Figure 7**

**Figure 8**

**Figure 9**

**Figure 10**

**Figure 11**

**Figure 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. MÜNCH et al.** *Modeling and Current Control of Modular Multilevel Converters Considering Actuator and Sensor Delays*

- Modulated Model Predictive Control for a Three-Phase Active Rectifier. **TARISCIOTTI LUCA et al.** IEEE TRANSACTIONS ON INDUSTRY APPLICATIONS. IEEE SERVICE CENTER, 01 March 2015, vol. 51, 1610-1620